# EUROPEAN PATENT APPLICATION

(11) **EP 2 512 077 A1**
(43) Date of publication of application: **17.10.2012**
(21) Application number: 11800094.2
(22) Date of filing: 10.05.2011
(51) Int. Cl.: H04L 12/56

(54) **METHOD, APPARATUS AND SYSTEM FOR SHARING NETWORK FLOW**

(30) Priority: 02.07.2010 CN 201010223998
(71) Applicant: Huawei Technologies Co., Ltd., Shenzhen, Guangdong 518129 (CN)
(72) Inventor: YI, Ke, Shenzhen Guangdong 518129 (CN); DI, Haibing, Shenzhen Guangdong 518129 (CN)
(74) Representative: Schmitz, Alexander
(86) International application number: PCT/CN2011/073855
(87) International publication number: WO 2012/000349

(57) **Abstract**

Embodiments of the present invention provide a method, an apparatus, and a system for sharing network traffic. The method includes: receiving a flow label in a message sent by an upper-level node; adjusting the flow label, so that flow labels of adjacent intermediate nodes are different; and performing equal-cost path routing according to the adjusted flow label. With the technical solutions described in the embodiments of the present invention, a flow label in a received message is adjusted at an intermediate node, so that flow labels obtained by adjacent intermediate nodes are different, and therefore, traffic sharing of each node is effective, and flexibility of the traffic sharing of each node is improved.

## Description

This application claims priority to Chinese Patent Application No. CN201010223998.3, filed with the Chinese Patent Office on July 2, 2010, and entitled "METHOD, APPARATUS, AND SYSTEM FOR SHARING NETWORK TRAFFIC", which is incorporated herein by reference in its entirety.

### FIELD OF THE INVENTION

The present invention relates to network communications technologies, and in particular to a method, an apparatus, and a system for sharing network traffic.

### BACKGROUND OF THE INVENTION

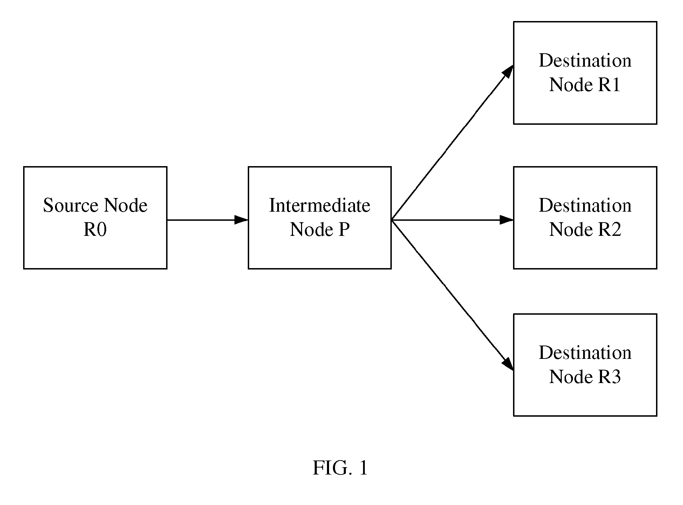

FIG. 1 shows a method for sharing network traffic in the prior art. The flow comes from a source node R0, passes through an intermediate node P and is shared by destination nodes R1, R2, and R3, where the intermediate node P in the prior art performs following equal-cost routing according to a parsed flow label in a message, and the flow label is deleted when reaching nodes R1, R2, and R3.

In a process of implementing the present invention, the inventor finds that the prior art has at least the following problems.

The method for sharing network traffic in the prior art is only applicable to a case in which only one intermediate node exists. If two or more intermediate nodes exist and each intermediate node performs equal-cost routing according to a flow label in the same manner, the shunting cannot be implemented at intermediate nodes at a second or lower level, thereby resulting in a failure of traffic sharing at each node.

### SUMMARY OF THE INVENTION

Embodiments of the present invention provide a method, an apparatus, and a system for sharing network traffic, so as to improve flexibility of traffic sharing of each node when a plurality of intermediate nodes exist.

An embodiment of the present invention provides a method for sharing network traffic, where the method includes:
receiving a flow label in a message sent by an upper-level node, and adjusting the flow label, so that flow labels of adjacent intermediate nodes are different; and
performing equal-cost path routing according to the adjusted flow label.

An embodiment of the present invention further provides an apparatus for sharing network traffic. The apparatus is disposed in an intermediate node and includes:
a receiving module, configured to receive a flow label in a message sent by an upper-level node;
an adjusting module, configured to adjust, according to a preset rule, the flow label received by the receiving module, so that flow labels of adjacent intermediate nodes are different; and
a routing module, configured to perform equal-cost path routing according to the flow label adjusted by the adjusting module.

An embodiment of the present invention further provides a system for sharing network traffic, where the system includes the apparatus for sharing network traffic and an upper-level node, where the upper-level node includes an ingress edge device or an upper-level intermediate node, where the ingress edge device is configured to receive a message sent from a user side, hash HASH out a flow label by parsing information of the received message, insert the flow label into the message and send the message to a lower-level intermediate node.

It can be seen from the technical solutions provided in the embodiments of the present invention that, a flow label in a received message is adjusted at an intermediate node, so that flow labels obtained by adjacent intermediate nodes are different, and therefore, traffic sharing of each node is effective, and flexibility of the traffic sharing of each node is improved.

### BRIEF DESCRIPTION OF THE DRAWINGS

To describe the technical solutions in the embodiments of the present invention more clearly, the accompanying drawings required for describing the embodiments are introduced briefly in the following. Apparently, the accompanying drawings in the following description are only some embodiments of the present invention, and persons of ordinary skill in the art may still derive other drawings from these accompanying drawings without creative efforts.
FIG. 1 is a schematic structural diagram among nodes in a method for sharing network traffic in the prior art;
FIG. 2 is a schematic flowchart of a method for sharing network traffic according to an embodiment of the present invention;
FIG. 3 is a schematic diagram of an encapsulation structure of a flow label according to an embodiment of the present invention;
FIG. 4 is a schematic flowchart illustrating interaction among nodes by taking one first-level intermediate node, two second-level intermediate nodes, and four destination nodes as an example according to an embodiment of the present invention;
FIG. 5 is a schematic structural diagram of an apparatus for sharing network traffic according to an embodiment of the present invention; and
FIG. 6 is a schematic flowchart illustrating interaction among nodes in a system for sharing network traffic by taking a source node, one first-level intermediate node, two second-level intermediate nodes, and four destination nodes as an example according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments in the following description are merely a part rather than all of the embodiments of the present invention. Based on the embodiments of the present invention, all other embodiments obtained by persons of ordinary skill in the art without creative efforts shall fall within the protection scope of the present invention.

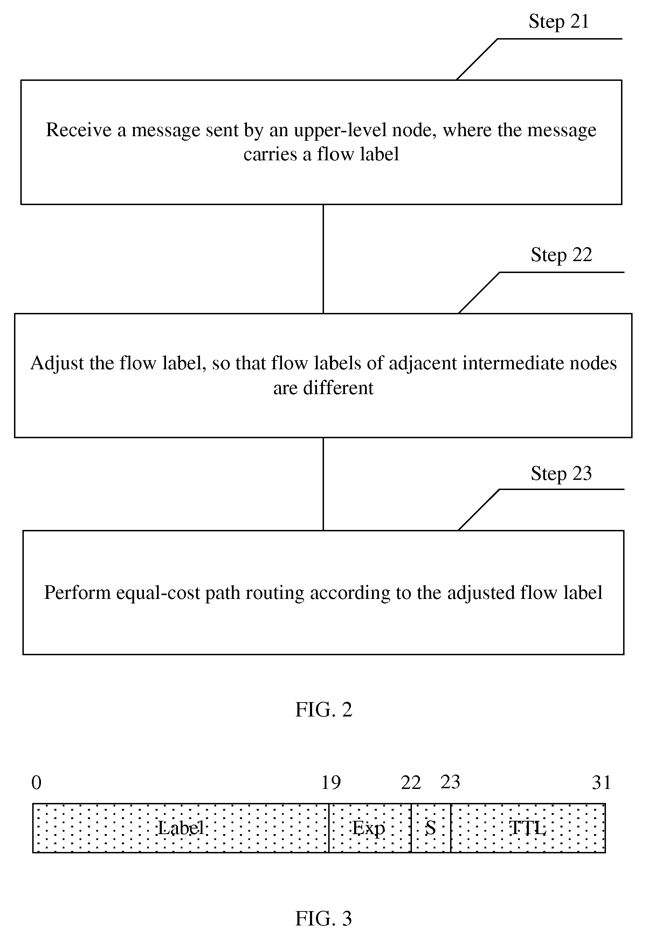

An embodiment of the present invention provides a method for sharing network traffic, which is applicable to load sharing with a disturbance factor and is also applicable to forwarding of a message. As shown in FIG. 2, the method includes:
Step 21: Receive a message sent by an upper-level node, where the message carries a flow label.

Specifically, the upper-level node may include a source node (an ingress edge device) or an upper-level intermediate node, where the ingress edge device may be a router. The ingress edge device provides an access service for a virtual private network (VPN, Virtual Private Network) of an enterprise or a group, and provides the access to the metropolitan Ethernet. The ingress edge device may be configured to receive a message sent from a user side, hash HASH out a flow label by parsing information of the received message, insert the flow label into the message and send the message to a lower-level node. A process for hashing HASH out the flow label by parsing the information of the received message includes, but is not limited to, parsing out the flow label by performing a hash HASH on two or more parameters of the message among a source IP (Internet Protocol, IP) address, a destination IP address, a source media access control MAC address, a destination media access control MAC address, and a port number. For example, the flow label is parsed out by performing a hash HASH between the source IP address and the destination IP address of the message. Hash HASH may have many forms, such as an inclusive-OR operation or an exclusive-OR operation, for example, the flow label is obtained by performing an exclusive-OR operation on the source IP address and the destination IP address.

Further, the intermediate node may be a backbone router in a network, and is not directly connected to a customer edge (CE, Customer Edge). The intermediate node has a basic multi-protocol label switching (MPLS, Multi-Protocol Label Switching) forwarding function, and does not maintain multi-protocol label switching information. The length of the flow label is 4 bytes (32 bits). FIG. 3 shows an encapsulation structure of the flow label. The flow label may include a 20-bit label value field (Label), a 3-bit experimental field (Exp), a 1-bit bottom of label stack field (S), and an 8-bit time to live field (TTL).

Step 22: Adjust the flow label, so that flow labels of adjacent intermediate nodes are different.

Specifically, flow labels in messages received by each intermediate node are the same, that is, all of them are flow labels in messages sent by the ingress edge device. The adjustment of the flow label is confined among the intermediate nodes, and a preset rule may be determined according to an actual condition of network traffic or a specific setting of an operator. Flow labels of the intermediate nodes are adjusted according to the preset rule as long as flow labels of adjacent intermediate nodes are different. For example, there are three intermediate nodes, and sending is from a first-level intermediate node to a second-level intermediate node, and from the second-level intermediate node to a third-level intermediate node. The first-level intermediate node may not adjust a received flow label, but the second-level intermediate node adjusts the received flow label and the third-level intermediate node may also not adjust the received flow label; or a received flow label may also be adjusted between adjacent intermediate nodes by using different rules. The preset rule includes, but is not limited to, the following types:

An operation of a value of the flow label or a value of the label value field in the flow label modulo the total number of equal-cost routes is performed. Other algorithms may also be used. For example, a value of a value field in a flow label of 8 modulo the total number of equal-cost routes of 5 is 3, where a modulo operation result is used to indicate a selected path.

Alternatively, positions of odd numbers and positions of even numbers of 20-bit data of the label value field in the flow label are transposed. For example, positions of odd numbers and positions of even numbers in lower 10-bit data may be transposed, and positions of odd numbers and positions of even numbers in 20-bit data may also be transposed. For example, if positions of odd numbers and positions of even numbers in lower 10-bit data are transposed, and the lower 10-bit data is 0101010110, transposed data is 1010101001. In this case, an upper-level intermediate node performs routing according to a flow label before adjustment and a current-level intermediate node performs routing according to an adjusted flow label, so that their selected paths are different, thereby avoiding a failure of the current-level intermediate node.

Alternatively, different values of 2 bits or more bits in 20-bit data of the label value field in the flow label are transposed. For example, higher 10-bit data and lower 10-bit data may be transposed, and higher 5-bit data and lower 5-bit data in the lower 10-bit data may also be transposed. For example, if higher 5-bit data and lower 5-bit data in the lower 10-bit data are transposed, and the lower 10-bit data is 0101010110, transposed data is 1011001010. In this case, an upper-level intermediate node performs routing according to a flow label before adjustment, and a current-level intermediate node performs routing according to an adjusted flow label, so that their selected paths are different, thereby avoiding a failure of the current-level intermediate node.

Alternatively, different values in odd positions and even positions in 3-bit data of the experimental field in the flow label are transposed. For example, if the 3-bit data is 101, transposed data is 110 or 011. In this case, an upper-level intermediate node performs routing according to a flow label before adjustment and a current-level intermediate node performs routing according to an adjusted flow label, so that their selected paths are different, thereby avoiding a failure of the current-level intermediate node.

Alternatively, different values of 2 bits or more bits in 3-bit data of the experimental field in the flow label are transposed. For example, if the 3-bit data is 011, transposed data is 101 or 110. In this case, an upper-level intermediate node performs routing according to a flow label before adjustment and a current-level intermediate node performs routing according to an adjusted flow label, so that their selected paths are different, thereby avoiding a failure of the current-level intermediate node.

Alternatively, positions of odd numbers and positions of even numbers in 8-bit data of the time to live field in the flow label are transposed. For example, if the 8-bit data is 10010011, transposed data is 01100011.

Alternatively, different value of 2 bits or more bits in 8-bit data of the time to live field in the flow label are transposed. For example, if the 8-bit data is 10010011, transposed data is 01010011 or 10011100, and so on.

Step 23: Perform equal-cost path routing according to the adjusted flow label.

Specifically, a corresponding path is selected, according to the flow label, from paths with the same routing cost. For example, there are six paths with the same routing cost in total, which are L0, L1, L2, L3, L4, and L5 respectively, values of a flow label value field are 8 and 17 respectively, and results of an modulo operation are 2 and 5 respectively, therefore, their paths are L2 and L5 respectively. Alternatively, according to other manner, the flow label is adjusted to being different from a flow label of an upper-level intermediate node, so that their selected paths are different, thereby avoiding a failure of a current-level intermediate node.

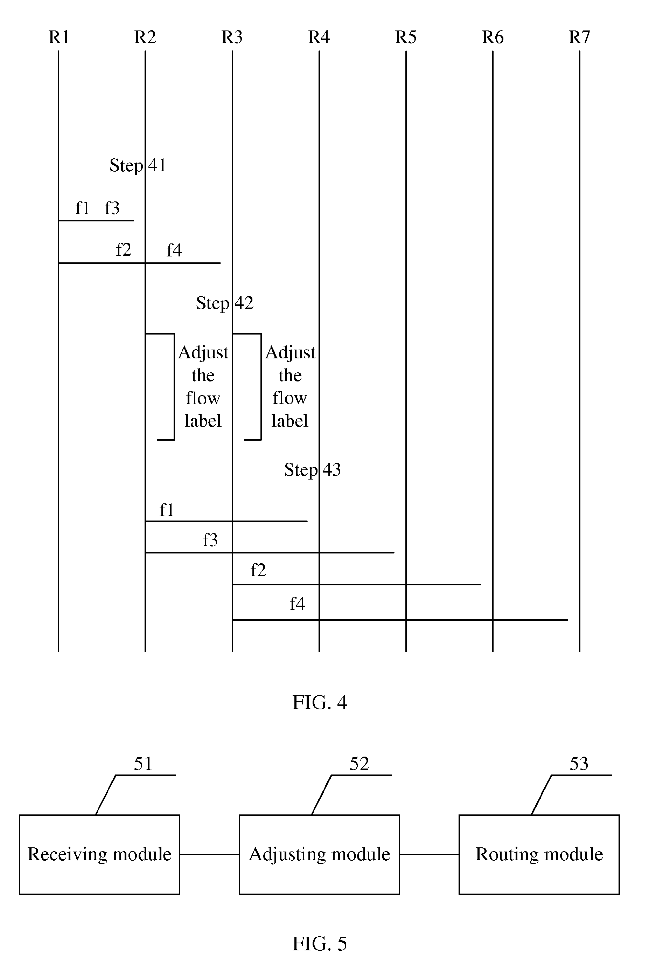

As shown in FIG. 4, description is made by taking that a first-level intermediate node R1, second-level intermediate nodes R2 and R3, and destination nodes R4, R5, R6, and R7 transmit four messages as an example.

Step 41: According to a flow label in a received message, R1 sends messages f1 and f3 to R2, and sends messages f2 and f4 to R3.

Step 42: R2 adjusts flow labels in the received messages f1 and f3, so that the flow labels are not equal to a flow label of R1; and R3 adjusts flow labels in the received messages f2 and f4, so that the flow labels are not equal to the flow label of R1.

Step 43: According to adjusted flow labels of the messages f1 and f3, R2 sends the messages f1 and f3 to R4 and R5 respectively; and according to adjusted flow labels of the messages f2 and f4, R3 sends the messages f2 and f4 to R6 and R7 respectively.

Persons of ordinary skill in the art may understand that all or a part of the procedures of the method according to the foregoing embodiments may be implemented by a computer program instructing relevant hardware. The program may be stored in a computer readable storage medium. When the program runs, the procedures of the methods according to the foregoing embodiments are performed. The storage medium may be a magnetic disk, an optical disk, a read-only memory (Read-Only Memory, ROM), or a random access memory (Random Access Memory, RAM).

With the method for sharing network traffic in the embodiments of the present invention, a flow label that is parsed from a received message is adjusted at a second or lower-level intermediate node, so that the flow label is different from a flow label obtained at an upper-level intermediate node, and therefore, traffic sharing of each node is effective, and flexibility of the traffic sharing of each node is improved. Meanwhile, a flow label of each intermediate node may be adjusted flexibly according to an actual condition of network traffic, so as to implement randomness and dispersivity of a flow label of each intermediate node for routing, thereby objectively improving uniform distribution of traffic sharing in terms of probability.

An apparatus for sharing network traffic in an embodiment of the present invention is applicable to load sharing with a disturbance factor and is also applicable to the forwarding of a message. As shown in FIG. 5, the apparatus is disposed in an intermediate node and includes a receiving module 51, an adjusting module 52, and a routing module 53.

The receiving module 51 is configured to receive a message sent by an upper-level node, where the message carries a flow label.

Specifically, the upper-level node may include a source node (an ingress edge device) or an upper-level intermediate node. The flow label is 4 bytes (32 bits) long, has an encapsulation structure as shown in FIG. 3, and may include a 20-bit label value field (Label), a 3-bit experimental field (Exp), a 1-bit bottom of label stack field (S), and an 8-bit time to live field (TTL).

The adjusting module 52 is configured to adjust the flow label received by the receiving module 51, so that flow labels of adjacent intermediate nodes are different.

Specifically, flow labels in messages received by each intermediate node are the same, that is, are flow labels in messages sent by an ingress edge device. The adjustment of the flow label is confined among the intermediate nodes, and a preset rule may be determined according to an actual condition of network traffic or a specific setting of an operator. Flow labels of the intermediate nodes are adjusted according to the preset rule as long as flow labels of adjacent intermediate nodes are different. For example, there are three intermediate nodes, sending is from a first-level intermediate node to a second-level intermediate node, and from the second-level intermediate node to a third-level intermediate node. The first-level intermediate node may not adjust a received flow label, but the second-level intermediate node adjusts the received flow label and the third-level intermediate node may also not adjust the received flow label; or a received flow label may also be adjusted between adjacent intermediate nodes by using different rules. The preset rule includes, but is not limited to, the following types:

An operation of a value of the flow label or a value of the label value field in the flow label modulo the total number of equal-cost routes is performed. For example, a value of a value field in a flow label of 8 modulo the total number of equal-cost routes of 5 is 3, where a modulo operation result is used to indicate a selected path.

Alternatively, positions of odd numbers and positions of even numbers of 20-bit data of the label value field in the flow label are transposed. For example, positions of odd numbers and positions of even numbers in lower 10-bit data may be transposed, and positions of odd numbers and positions of even numbers in 20-bit data may also be transposed. For example, if positions of odd numbers and positions of even numbers in lower 10-bit data are transposed, and the lower 10-bit data is 0101010110, transposed data is 1010101001. In this case, an upper-level intermediate node performs routing according to a flow label before adjustment and a current-level intermediate node performs routing according to an adjusted flow label, so that their selected paths are different, thereby avoiding a failure of the current-level intermediate node.

Alternatively, different values of 2 bits or more bits in 20-bit data of the label value field in the flow label are transposed. For example, higher 10-bit data and lower 10-bit data may be transposed, and higher 5-bit data and lower 5-bit data in the lower 10-bit data may also be transposed. For example, if higher 5-bit data and lower 5-bit data in the lower 10-bit data are transposed, and the lower 10-bit data is 0101010110, transposed data is 1011001010. In this case, an upper-level intermediate node performs routing according to a flow label before adjustment and a current-level intermediate node performs routing according to an adjusted flow label, so that their selected paths are different, thereby avoiding a failure of the current-level intermediate node.

Alternatively, different values in odd positions and even positions in 3-bit data of the experimental field in the flow label are transposed. For example, if the 3-bit data is 101, transposed data is 110 or 011. In this case, an upper-level intermediate node performs routing according to a flow label before adjustment and a current-level intermediate node performs routing according to an adjusted flow label, so that their selected paths are different, thereby avoiding a failure of the current-level intermediate node.

Alternatively, different values of 2 bits or more bits in 3-bit data of the experimental field in the flow label are transposed. For example, if the 3-bit data is 011, transposed data is 101 or 110. In this case, an upper-level intermediate node performs routing according to a flow label before adjustment and a current-level intermediate node performs routing according to an adjusted flow label, so that their selected paths are different, thereby avoiding a failure of the current-level intermediate node.

Alternatively, positions of odd numbers and positions of even numbers in 8-bit data of the time to live field in the flow label are transposed. For example, if the 8-bit data is 10010011, transposed data is 01100011.

Alternatively, different values of 2 bits or more bits in 8-bit data of the time to live field in the flow label are transposed. For example, if the 8-bit data is 10010011, transposed data is 01010011 or 10011100, and so on.

The routing module 53 is configured to perform equal-cost path routing according to the flow label adjusted by the adjusting module 52.

Specifically, a corresponding path is selected, according to the flow label, from paths with the same routing cost. For example, there are six paths with the same routing cost in total, which are L0, L1, L2, L3, L4, and L5 respectively, values of a flow label value field are 8 and 17 respectively, and results of an modulo operation are 2 and 5 respectively, therefore, their paths are L2 and L5 respectively. Alternatively, according to other manner, the flow label is adjusted to being different from a flow label of an upper-level intermediate node, so that their selected paths are different, thereby avoiding a failure of a current-level intermediate node.

A specific implementation manner of a processing function of each module included in the foregoing apparatus has been described in the foregoing method embodiments, which is not described herein again.

An embodiment of the present invention further provides a system for sharing network traffic, where the system includes the foregoing apparatus for sharing network traffic and an upper-level node, and the upper-level node may include an ingress edge device or an upper-level intermediate node.

Further, the ingress edge device may be configured to receive a message sent from a user side, hash HASH out a flow label by parsing information of the received message, insert the flow label into the message and send the message to a lower-level intermediate node. A process for hashing HASH out the flow label by parsing the information of the received message may include, but is not limited to, parsing out the flow label by performing hash HASH on two or more parameters of the message among a source IP address, a destination IP address, a source media access control MAC address, a destination media access control MAC address, and a port number. For example, the flow label is parsed out by performing hash HASH between the source IP address and the destination IP address of the message. Hash HASH may have many forms, such as an inclusive-OR operation or an exclusive-OR operation, for example, the flow label is obtained by performing an exclusive-OR operation on the source IP address and the destination IP address.

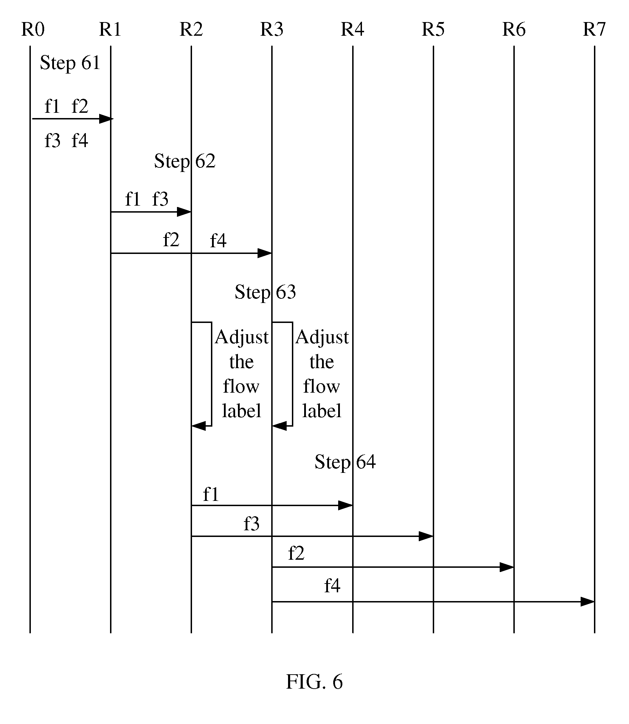

As shown in FIG. 6, description is made by taking that a source node, that is, an ingress edge device R0, a first-level intermediate node R1, second-level intermediate nodes R2 and R3, and destination nodes R4, R5, R6, and R7 transmit four messages as an example.

Step 61: R0 receives messages f1, f2, f3, and f4 that are sent from a user side, hashes HASH out flow labels by parsing information of the received messages respectively, inserts the flow labels respectively into corresponding messages and sends the messages to a first-level intermediate node R1.

Step 62: According to the flow labels of the received messages, R1 sends the messages f1 and f3 to R2, and sends the messages f2 and f4 to R3.

Step 63: R2 adjusts flow labels in the received messages f1 and f3, so that the flow labels are not equal to a flow label of R1; and R3 adjusts flow labels in the received messages f2 and f4, so that the flow labels are not equal to the flow label of R1.

Step 64: According to adjusted flow labels of the messages f1 and f3, R2 sends the messages f1 and f3 to R4 and R5 respectively; and according to adjusted flow labels of the messages f2 and f4, R3 sends the messages f2 and f4 to R6 and R7 respectively.

With the method, the apparatus, and the system for sharing network traffic provided in the embodiments of the present invention, a flow label in a received message is adjusted at an intermediate node, so that the flow label is different from a flow label that is obtained at an upper-level intermediate node, and therefore, a problem that in the prior art, load sharing is weakened and even ineffective in a two-level or multi-level load sharing scenario is solved, traffic sharing of each node is effective, and flexibility of the traffic sharing of each node is improved. Meanwhile, a flow label of each intermediate node may be adjusted flexibly according to an actual condition of network traffic, so as to implement randomness and dispersivity of a flow label of each intermediate node for routing, thereby objectively improving uniform distribution of traffic sharing in terms of probability.

The foregoing descriptions are merely exemplary embodiments of the present invention, but are not intended to limit the protection scope of the present invention. Any modification or replacement easily thought of by persons skilled in the art within the technical scope disclosed in the present invention shall all fall within the protection scope of the present invention. Therefore, the protection scope of the present invention shall be subject to that of the appended claims.

## Claims

1. A method for sharing network traffic, comprising:
receiving a flow label in a message sent by an upper-level node;
adjusting the flow label, so that flow labels of adjacent intermediate nodes are different; and
performing equal-cost path routing according to the adjusted flow label.

2. The method according to claim 1, wherein the adjusting the flow label is adjusting the flow label according to a preset rule.

3. The method according to claim 1 or 2, wherein the flow label in the message sent by the upper-level node comprises a label value field, an experimental field, a stack bottom identification field, and a time to live field.

4. The method according to claim 1 or 2 or 3, wherein the flow label in the message sent by the upper-level node comprises a label value field, an experimental field, a stack bottom identification field, and a time to live field.

5. The method according to any of claims 2 to 4, wherein the preset rule is determined according to an actual condition of network traffic or a specific setting of an operator, comprising:
performing an operation of a value of the flow label or a value of the label value field in the flow label modulo the total number of equal-cost routes; or
transposing positions of odd numbers and positions of even numbers of 20-bit data of the label value field in the flow label; or
transposing different values of 2 bits or more bits in 20-bit data of the label value field in the flow label; or
transposing positions of odd numbers and positions of even numbers in 3-bit data of the experimental field in the flow label; or
transposing different values of 2 bits or more bits in 3-bit data of the experimental field in the flow label; or
transposing positions of odd numbers and positions of even numbers in 8-bit data of the time to live field in the flow label; or
transposing different values of 2 bits or more bits in 8-bit data of the time to live field in the flow label.

6. The method according to any of claims 1 to 5, wherein the equal-cost path routing refers to selecting, according to the flow label, a corresponding path from paths with the same routing cost.

7. An apparatus for sharing network traffic, wherein the apparatus is disposed in an intermediate node and comprises:
a receiving module, configured to receive a flow label in a message sent by an upper-level node;
an adjusting module, configured to adjust, according to a preset rule, the flow label received by the receiving module, so that flow labels of adjacent intermediate nodes are different; and
a routing module, configured to perform equal-cost path routing according to the flow label adjusted by the adjusting module.

8. The apparatus according to claim 7, wherein the flow label received by the receiving module comprises a label value field, an experimental field, a stack bottom identification field, and a time to live field.

9. The apparatus according to claim 7 or 8, wherein the preset rule in the adjusting module is determined according to an actual condition of network traffic or a specific setting of an operator, comprising:
performing an operation of a value of the flow label or a value of the label value field in the flow label modulo the total number of equal-cost routes; or
transposing positions of odd numbers and positions of even numbers of 20-bit data of the label value field in the flow label; or
transposing different values of 2 bits or more bits in 20-bit data of the label value field in the flow label; or
transposing positions of odd numbers and positions of even numbers in 3-bit data of the experimental field in the flow label; or
transposing different values of 2 bits or more bits in 3-bit data of the experimental field in the flow label; or
transposing positions of odd numbers and positions of even numbers in 8-bit data of the time to live field in the flow label; or
transposing different values of 2 bits or more bits in 8-bit data of the time to live field in the flow label.

10. The apparatus according to any one of claims 7 to 9, wherein the routing module is specifically configured to select, according to the flow label, a corresponding path from paths with the same routing cost.

11. A system for sharing network traffic, comprising the apparatus according to any one of claims 7 to 10 and an upper-level node, wherein the upper-lever node comprises an ingress edge device or an upper-level intermediate node, and the ingress edge device is configured to receive a message sent from a user side, hash HASH out a flow label by parsing information of the received message, insert the flow label into the message and send the message to a lower-level intermediate node.

12. The system according to claim 11, wherein the hashing HASH out the flow label by parsing the information of the received message comprises:
parsing out the flow label by performing hashing HASH on two or more parameters of the message among a source IP address, a destination IP address, a source media access control MAC address, a destination media access control MAC address, and a port number.
